# EUROPÄISCHE PATENTSCHRIFT

(11) **EP 1 903 316 B1**
(45) Veröffentlichungstag und Bekanntmachung des Hinweises auf die Patenterteilung: **28.01.2009**
(21) Anmeldenummer: 07010846.9
(22) Anmeldetag: 01.06.2007
(51) Int. Cl.: G01D 5/347, G01B 21/22

(54) **Winkelmesssystem und Verfahren zu dessen Herstellung**
Rotary encoder and method of its manufacture
Capteur angulaire et procédé de sa fabrication

(30) Priorität: 20.09.2006 DE 102006044359
(43) Veröffentlichungstag der Anmeldung: 26.03.2008
(73) Patentinhaber: Dr. Johannes Heidenhain GmbH, 83301 Traunreut (DE)
(72) Erfinder: Mitterreiter, Johann, 83339 Chieming (DE)

(56) Entgegenhaltungen:
- EP-A- 1 643 216
- EP-A1- 0 902 257
- DE-A1- 19 640 895
- JP-A- 2001 255 335

## Beschreibung

Die Erfindung betrifft ein Winkelmesssystem gemäß dem Anspruch 1, und ein Verfahren zur Herstellung eines entsprechenden Winkelmesssystems gemäß dem Anspruch 10.

Derartige Winkelmesssysteme dienen zur Messung von Drehbewegungen bzw. Drehstellungen eines Maschinenteils, etwa einer Welle. Die Drehbewegung wird dabei entweder inkremental oder absolut erfasst, der ausgegebene Messwert ist z. B. eine Folge von Zählimpulsen, ein Zählerwert oder ein Codewort. Entsprechende Winkelmesssysteme werden insbesondere in so genannten Pick-and-Place-Maschinen in der Fertigung von elektronischen Bauteilen verwendet, oder in Werkzeugmaschinen für die Messung von rotatorischen Bewegungen eingesetzt. Die Reproduzierbarkeit, bzw. Wiederholbarkeit der Drehwinkel von Maschinenteilen auf nur wenige Winkelsekunden genau ist beispielsweise bei Pick-and-Place-Maschinen von großer Bedeutung. Bei Werkzeugmaschinen ist insbesondere die absolute Genauigkeit der Messergebnisse eines Winkelmesssystems entscheidend. Es sind Winkelmesssysteme bekannt, die eine eigene Lagerung der relativ zueinander drehbaren Bauteile aufweisen.

Die Genauigkeit einer Winkelmessung wird wesentlich durch die Güte der Winkelskalierung, deren Exzentrizität und durch die Rundlauf-Abweichungen der Lagerung bzw. Taumelfehler beeinflusst.

In der Offenlegungsschrift DE 30 36 005 A1 ist ein Verfahren zum Herstellen einer Winkelskalierung für ein Winkelmesssystem offenbart, bei welchem auf eine Codescheibe Codespuren durch einen Laserstrahl aufgebracht werden. Die Codescheibe ist beim Beschreiben bereits mit einer Welle verbunden, so dass die Codescheibe beim Beschreiben des Codemusters bereits gegenüber der Welle zentriert ist.

Dieses bekannte Verfahren weist den Nachteil auf, dass die damit hergestellten Winkelmesssysteme nicht höchste Genauigkeiten erreichen, für viele Anwendungen nicht ausreichend robust sind und überdies relativ viel Bauraum benötigen.

Die DE-A-196 40 895 beschreibt ein Winkelmesssystem, das eine Lageranordnung und einen Abtastkopf umfasst. Das Lager besteht aus einem inneren Teilungsring, der die Winkelskalierung auf einer Mantelfläche trägt, und einem Außenring, der spielfrei über Wälzkörper auf dem Teilungsring läuft. Der Abtastkopf tastet dabei die Winkelskalierung ab.

Die EP-A-0 902 257 beschreibt eine ähnliche Lageranordnung mit integriertem Winkelmesssystem. Dabei wird die Winkelskalierung unmittelbar auf dem inneren Teilungsring des Lagers aufgebracht.

Der Erfindung liegt die Aufgabe zugrunde, ein robustes Winkelmesssystem und ein Verfahren zu dessen Herstellung zu schaffen, welches sich insbesondere dadurch auszeichnet, dass in einfacher Bauweise ein sehr genau arbeitendes kompaktes Winkelmesssystem realisierbar ist.

Diese Aufgabe wird durch ein Winkelmesssystem gemäß dem Anspruch 1 gelöst. Demnach umfasst das Winkelmesssystem eine Lageranordnung und einen Abtastkopf, wobei die Lageranordnung aus einem Teilungsring, einem Außenring und Wälzkörpern besteht, wobei der Teilungsring relativ zum Außenring um eine Achse drehbar ist. Sowohl am Teilungsring als auch am Außenring ist jeweils eine Lauffläche ausgebildet, wobei die Lauffläche des Teilungsrings einen kleineren Bahnradius aufweist als die Lauffläche des Außenrings. Die Lauffläche des Außenrings liegt der Lauffläche des Teilungsrings gegenüber, wobei die Wälzkörper zwischen den beiden Laufflächen in der Weise angeordnet sind, dass die Lageranordnung radial spielfrei ist, also kein radiales Lagerspiel aufweist. Weiterhin ist eine Winkelskalierung unmittelbar auf dem Teilungsring so aufgebracht, dass ein geometrisches Muster der Winkelskalierung in einem ersten Bereich von einem geometrischen Muster der Winkelskalierung in einem zweiten Bereich in Abhängigkeit von Rundlaufabweichungen der Lageranordnung abweicht. Dabei ist die Winkelskalierung durch den Abtastkopf abtastbar.

Die geometrischen Muster der Winkelskalierung des Winkelmesssystems sind also unter anderem abhängig von den individuellen Maßen bzw. Maßabweichungen der jeweiligen im Winkelmesssystem eingebauten Lageranordnung.

Der Teilungsring kann ein Bestanteil eines Innenrings der Lageranordnung sein. Dies ist dann der Fall, wenn der Innenring mehrteilig aufgebaut ist. Wenn der Innenring einteilig ausgestaltet ist, stellt der Innenring gleichzeitig den Teilungsring dar.

Im Übrigen sind die Laufflächen diejenigen Flächen bzw. Bahnen entlang welcher die Wälzkörper im Betrieb der Winkelmesseinrichtung abrollen. Die Lauffläche des Teilungsrings ist aus achsparalleler Sicht konvex ausgebildet, während die Lauffläche des Außenrings konkav ist. Die Bahnradien der Laufflächen sind als die kürzesten Verbindungen zwischen der Achse und dem zur Achse nächsten Punkt auf der jeweiligen Lauffläche zu verstehen.

Mit Vorteil ist die Winkelskalierung an einer Mantelseite des Teilungsrings angeordnet. Unter dem Begriff Mantelseite ist eine zylindrische Oberfläche bzw. Umfangsfläche zu verstehen, die entweder um 360° geschlossen ist oder nur einen Teil einer Umfangsfläche darstellt. Die Winkelskalierung kann dann mit einer Richtungskomponente parallel zur Achse ausgerichtet sein. Häufig besteht die Winkelskalierung aus einer Vielzahl von Teilungsstrichen. In diesem Fall sind dann die Teilungsstriche mit einer Richtungskomponente parallel zur Achse ausgerichtet. Insbesondere kann die Winkelskalierung auch aus mehreren Spuren bestehen, beispielsweise wenn von der Winkelskalierung unmittelbar die absolute Winkellage einer zu messenden Welle ermittelbar sein soll.

In weiterer Ausgestaltung der Erfindung weist der Teilungsring des Winkelmesssystems, eine axiale Ausdehnung auf, die in Radialrichtung variiert. Das heißt, dass der Teilungsring beispielsweise Absätze oder Stufen aufeisen kann. Eine derartige Bauweise hat eine Reihe von Vorteilen. Zunächst kann so die Innenwand bzw. der innere Bereich des Teilungsrings so gestaltet werden, dass dieser die maximale axiale Ausdehnung des Teilungsrings aufweist. Dadurch kann der Teilungsring so auf eine zu messende Welle montiert werden, dass ein maximales Führungsverhältnis vorliegt, das heißt, dass eine optimale Ausrichtung des Winkelmesssystems an der zu messenden Welle im späteren Betrieb erreicht wird und z. B. Taumelfehler minimiert werden. Der Teilungsring ist in weiterer Ausgestaltung der Erfindung so konfiguriert, dass er direkt auf die zu messende Welle berührend montiert werden kann. Dadurch ist es möglich, die Toleranzkette auf ein Minimum zu reduzieren, was die Messgenauigkeit des Winkelmesssystems letztlich erhöht. Weiterhin kann der Teilungsring so ausgestaltet sein, dass derjenige Bereich des Teilungsrings (z.B. dessen Mantelseite), auf welchem die Winkelskalierung aufgebracht ist, sich zumindest teilweise radial außerhalb des minimalen Innendurchmessers des Außenrings befindet. Zu diesem Zweck ist es vorteilhaft, wenn im Bereich des Umgriffs der Teilungsring eine reduzierte axiale Ausdehnung aufweist. Die radial weit außen liegende Winkelskalierung, welche durch die genannte Bauweise erzeugbar ist, hat den Vorteil, dass die Winkelskalierung überaus fein ausgestaltet werden kann, beispielsweise sehr viele Teilungsstriche über dem Umfang aufgebracht werden können.

Alternativ oder ergänzend zur im Wesentlichen axialen Ausrichtung der Winkelskalierung kann die Winkelskalierung auch mit einer radialen Richtungskomponente ausgerichtet sein. In diesem Fall wird zumindest ein Teil der Winkelskalierung stirnseitig auf den Teilungsring aufgetragen.

Besonders gute Messgenauigkeiten des Winkelmesssystems werden erreicht, wenn die Lageranordnung auch kein axiales Lagerspiel aufweist, also axial spielfrei ist.

Mit Vorteil ist das Winkelmesssystem so ausgestaltet, dass dessen maximale axiale Ausdehnung weniger als 40 %, insbesondere weniger als 30 % des maximalen Außenradius des Winkelmesssystems beträgt. Weiterhin ist es vorteilhaft, wenn das Winkelmesssystem eine relativ große Öffnung zur Aufnahme einer zu messenden Welle aufweist, wobei der Radius der Öffnung mit Vorteil mindestens 50 %, insbesondere mindestens 60 % des maximalen Außenradius des Winkelmesssystems beträgt.

Weiterhin wird die Aufgabe durch ein Verfahren gemäß dem Anspruch 10 gelöst. Dabei werden in einem Verfahrensschritt zunächst der Teilungsring und der Außenring hergestellt, wobei sowohl am Teilungsring als auch am Außenring jeweils eine fein bearbeitete Lauffläche erzeugt wird. Danach folgt ein Zusammenbauen der Lageranordnung in der Weise, dass die Lauffläche des Außenrings der Lauffläche des Teilungsrings gegenüber liegt und die Wälzkörper zwischen beiden Laufflächen angeordnet sind. Dies geschieht so, dass die Lageranordnung radial spielfrei ist. Später werden der Teilungsring und der Außenring an relativ zueinander drehbaren Elementen - beispielsweise einem Statorblock und einer Welle - einer Teilungsmaschine festgelegt. In einem weiteren Verfahrensschritt erfolgt ein Aufbringen der Winkelskalierung unmittelbar auf den Teilungsring, wobei in diesem Schritt der Teilungsring relativ zum Außenring in der Teilungsmaschine um die Achse gedreht wird.

Die Winkelskalierung kann für eine optische Abtastung ausgestaltet sein, insbesondere kann die Winkelskalierung aus reflektierenden und kaum bzw. nicht reflektierenden Bereichen bestehen, so dass die Abtastung auf einem so genannten Auflicht-Prinzip beruht, bei dem vom Teilungsring reflektiertes und moduliertes Licht detektiert wird. Alternativ dazu kann die Winkelskalierung auch für andere Abtastprinzipien ausgestaltet sein, so kann beispielsweise auch eine magnetische Teilung aufgebracht werden oder die Winkelskalierung kann für eine induktive Abtastung angepasst sein. Die Winkelskalierung kann so beschaffen sein, dass durch diese nur inkrementale Winkellageinformationen auslesbar sind oder aber auch ergänzend oder alternativ dazu absolute Winkelpositionen.

Mit Vorteil werden die Laufflächen mit Hilfe eines Schleif-, Hon- oder Läppprozesses bearbeitet.

Zur Steigerung der Messgenauigkeit im späteren Betrieb des Winkelmesssystems wird der Außenring nur mittelbar für das Aufbringen der Winkelskalierung auf den Teilungsring über eine Kupplung an einem Element der Teilungsmaschine festgelegt. Diese Kupplung kann nach dem Aufbringen der Winkelskalierung im Winkelmesssystem verbleiben. Auf diese Weise können Fehler, die in der Charakteristik der jeweils eingebauten Kupplung begründet sind, minimiert werden.

Demnach kann das Winkelmesssystem zusätzlich, zur Lageranordnung und zum Abtastkopf eine Kupplung umfassen, wobei die Kupplung in radialer und axialer Richtung biegeweich dimensioniert ist und so eine bestimmte Charakteristik bezüglich ihrer Verformung aufweist. In diesem Fall ist eine Winkelskalierung unmittelbar auf dem Teilungsring so aufgebracht, dass ein geometrisches Muster der Winkelskalierung in einem ersten Bereich von einem geometrischen Muster der Winkelskalierung in einem zweiten Bereich in Abhängigkeit von Rundlaufabweichungen der Lageranordnung und von der Charakteristik der Kupplung abweicht.

Mit Vorteil wird die Winkelskalierung mit Hilfe eines Ablationsprozesses, insbesondere eines Laserablations-Prozess direkt auf den Teilungsring aufgebracht wird.

Vorteilhafte Ausführungsformen des erfindungsgemäßen Winkelmesssystems und des erfindungsgemäßen Verfahrens sind aus den Maßnahmen in den vom Anspruch 1 bzw. 10 abhängigen Ansprüchen zu entnehmen.

Weitere Vorteile, sowie Einzelheiten des erfindungsgemäßen Verfahrens ergeben sich aus der nachfolgenden Beschreibung eines Ausführungsbeispiels anhand der beiliegenden Figuren.

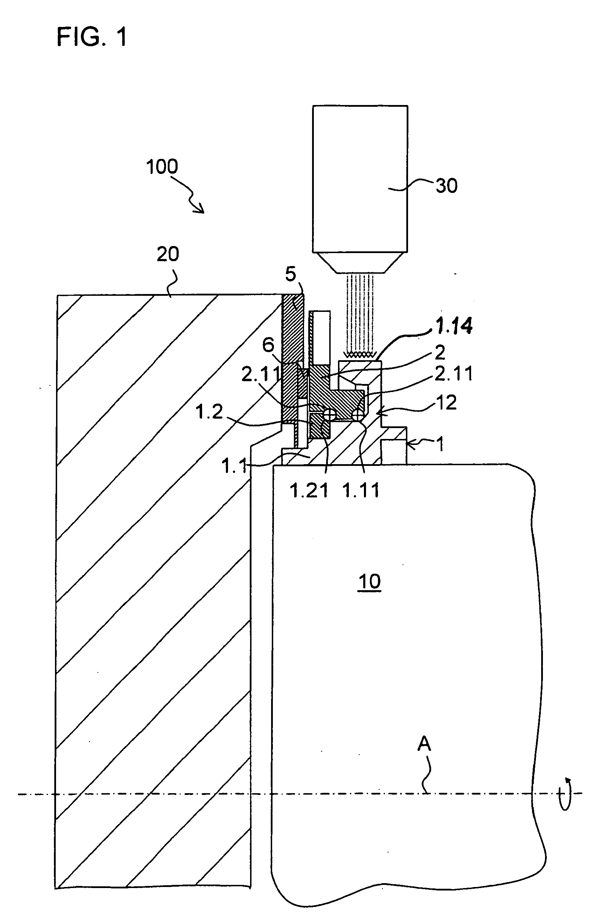

Es zeigen
- Figur 1: eine Teilschnittansicht auf eine vormontierte Einheit eines Winkelmesssystems, an einer Teilungsmaschine,

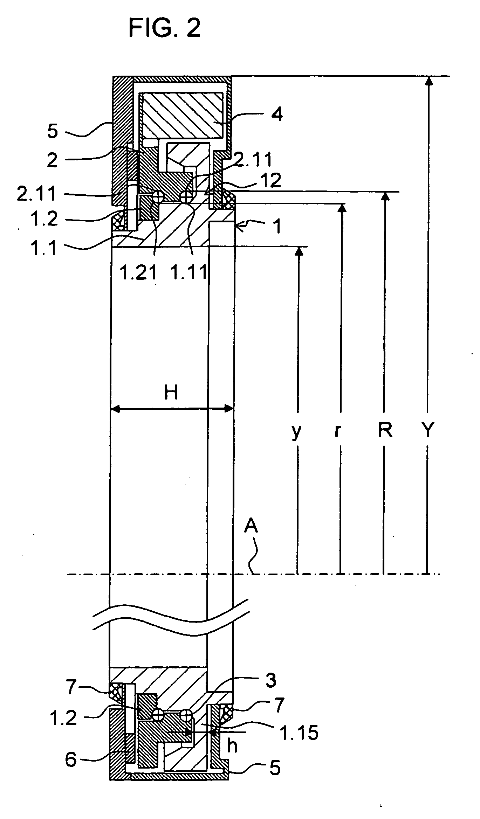

- Figur 2: eine Schnittansicht eines Winkelmesssystems,
- Figur 3a: eine Draufsicht auf einen Teil eines Teilungsrings des Winkelmesssystems,
- Figur 3b: eine Seitenansicht auf einen Teilbereich eines Teilungsrings des Winkelmesssystems.

Bei dem neuen Herstellungsverfahren werden zunächst ein zweiteiliger Innenring 1, umfassend einen Teilungsring 1.1 und ein zweites Bauteil 1.2, sowie ein Außenring 2 gefertigt. Dabei werden die Konturen anfangs vergleichsweise grob spanabtragend herausgearbeitet. In einem weiteren Schritt werden am Teilungsring 1.1, am zweiten Bauteil 1.2 und am Außenring 2 jeweils fein bearbeitete Laufflächen 1.11, 1.21, 2.11 durch einen Läppprozess erzeugt. Die Lauffläche 1.11 am Teilungsring 1.1 und die Lauffläche am 1.21 am zweiten Bauteil 1.2 sind in der Draufsicht kreisförmig konvex und weisen einen Bahnradius r auf, bzw. der jeweilige Verlauf der Laufflächen 1.11, 1.21 hat den Bahnradius r. Dagegen verläuft die Lauffläche 2.11 am Außenring 2 entlang einer Kreislinie mit dem Bahnradius R und ist konkav ausgestaltet. Der Bahnradius r der Lauffläche 1.11 am Teilungsring 1.1 ist kleiner als der Bahnradius R der Lauffläche 2.11 am Außenring 2.

Weitgehend konzentrisch zum Verlauf der Laufflächen 1.11 des Teilungsrings 1.1 wird mit Hilfe eines Feinschleifschrittes und eines nachfolgendem Polierprozesses eine überaus exakte Mantelfläche 1.14 am Teilungsring 1.1 erzeugt. Im nächsten Herstellungsschritt wird auf die Mantelseite 1.14 des Teilungsrings 1.1 eine dünne Ablations-Schicht aufgetragen.

Danach werden nun der Außenring 2 und der Teilungsring 1.1 sowie die Kugeln 3 so zusammengebaut, dass die Kugeln 3 als Wälzkörper zwischen beiden Laufflächen 1.11, 2.11 angeordnet sind. Anschließend wird das zweite Bauteil 1.2 des Innenrings 1 mit axialer Spannung montiert, so dass dadurch eine radiale und axiale Vorspannung zwischen dem Innenring 1 und dem Außenring 2 erzeugt wird. Auf diese Weise entsteht eine Lageranordnung 12, welche den Innenring 1 mit dem Teilungsring 1.1, den Außenring 2 und die Kugeln 3 als Wälzkörper umfasst, wobei der Teilungsring 1.1 relativ zum Außenring 2 um eine Achse A drehbar ist. Durch die Vorspannung des zweiten Teils 1.2 des Innenrings 1 und die konische Ausbildung der Laufflächen 1.11, 1.21, 2.11 wird die gesamte Lageranordnung 12 in der Weise axial und radial vorgespannt, dass die Lageranordnung 12 kein radiales Lagerspiel aufweist.

Der Teilungsring 1.1 ist zudem so ausgestaltet, dass dessen Innenwand 1.13 die maximale Ausdehnung H in axialer Richtung aufweist. Durch diese Bauweise wird eine optimale Ausrichtung des Winkelmesssystems an der zu messenden Welle im späteren Betrieb erreicht. Ferner umgreift der Teilungsring 1.1 den Außenring 2 teilweise. Zwischen dem radial äußersten Bereich und der Lauffläche 1.11 des Teilungsrings 1.1 befindet sich daher ein Bereich 1.15 des Teilungsrings 1.1 der eine geringere axiale Ausdehnung h aufweist als die radial benachbarten Bereiche, also als eine ringförmige axiale Dünnstelle ausgebildet ist.

An den Außenring 2 wird eine Kupplung 6 montiert, welche ihrerseits mit einem Flansch 5 verbunden ist. Die Kupplung 6 soll im Betrieb des Winkelmesssystems Fluchtungsfehler bzw. axiale Fehler zwischen der zu messenden Welle und einem entsprechenden Statorbauteil, an dem die zu messenden Welle gelagert ist, ausgleichen. Deshalb ist die Kupplung 6 in radialer und axialer Richtung vergleichsweise biegeweich, während sie in Umfangsrichtung ein überaus steifes Betriebsverhalten aufweist, so dass Winkelmessfehler minimiert sind.

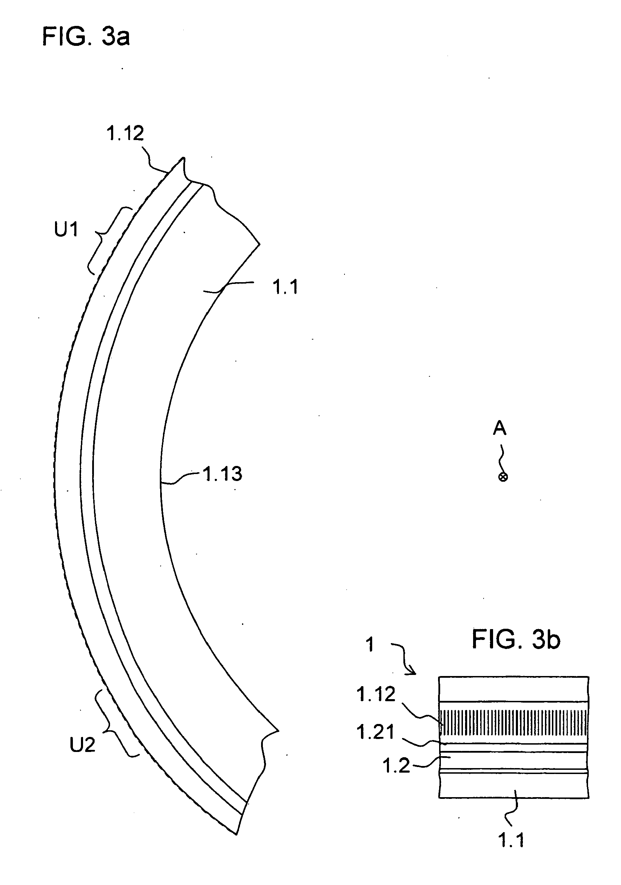

Die soweit montierte Einheit, bestehend aus der Lageranordnung 12 der Kupplung 6 und dem Flansch 5, wird nunmehr an einer Teilungsmaschine 100 befestigt. Die Teilungsmaschine 100 dient dazu eine Winkelskalierung 1.12 (Fig. 3b) auf den Teilungsring 1.1 aufzubringen und umfasst eine Welle 10, einen Statorblock 20 sowie einen Laser 30. Der Statorblock 20 und die Welle 10 sind unter Verwendung eines Luftlagers relativ zueinander drehbar. Zur Teilungsmaschine 100 gehört weiterhin eine überaus exakte Winkelmesseinrichtung, die in den Figuren nicht dargestellt ist und dazu dient, die Winkellage der Welle 10 gegenüber dem Statorblock 20 genau zu bestimmen.

Vor dem Aufbringen der Winkelskalierung 1.12 wird zunächst der Teilungsring 1.1 unmittelbar berührend an der Welle 10 der Teilungsmaschine 100 drehfest festgelegt. Ebenso wird auch der Außenring 2 am Statorblock 20 fixiert, allerdings wird hier eine mittelbare Befestigung über die Kupplung 6 und den Flansch 5 vorgenommen. In diesem Montagezustand bewirkt folglich eine Drehung der Welle 10 eine Drehung des Innenrings 1 bzw. des Teilungsrings 1.1.

Mit Hilfe eines Laserablations-Prozesses wird dann die Winkelskalierung 1.12, bestehend aus einer Vielzahl von Teilungsstrichen, unmittelbar auf die Mantelseite 1.14 des Teilungsrings 1.1 aufgebracht. Dabei werden schrittweise durch den Laser 30 auf der Mantelseite 1.14 zur Achse A im Wesentlichen parallele Teilungsstriche als Winkelskalierung 1.12 durch Einzelstrichablation erzeugt. Im vorgestellten Ausführungsbeispiel beträgt der Abstand der Mitten der Teilungsstriche 20 µm. Es wird hierbei nach jedem erzeugten Teilungsstrich auf der Mantelseite 1.14 des Teilungsrings 1.1 die Welle 10 minimal weitergedreht, so dass der nächste Teilungsstrich aufgebracht werden kann. Zwischen den jeweiligen Belichtungsschritten wird also der Teilungsring 1.1, kontrolliert durch die Winkelmesseinrichtung, um die Achse A weitergeschwenkt. Trotzt der überaus präzisen Herstellung der Lageranordnung 12 weist diese naturgemäß noch Abweichungen von ihrer Idealgeometrie auf. Entsprechend führen Rundlaufabweichungen der Lageranordnung 12 zu in Umfangsrichtung unterschiedlichen geometrischen Mustern der Winkelskalierung 1.12, weil die Winkelskalierung 1.12 auf dem Teilungsring 1.1 in einer Anbausituation aufgebracht ist, die der endgültigen Lagerung entspricht und zudem die Lageranordnung 12 radial und axial vorgespannt ist. So kann auf Grund der genannten Rundlaufabweichungen, z. B. einer Exzentrizität oder eines Taumelfehlers, das geometrische Muster der Winkelskalierung 1.12 im Bereich U1 von dem Muster im Bereich U2 abweichen, und zwar abhängig von den lokal an den jeweiligen Umfangspunkten vorliegenden Rundlaufabweichung. Hinzu kommt, dass im vorgestellten Ausführungsbeispiel auch die Charakteristik der Kupplung 6 Einfluss auf die Muster der Winkelskalierung 1.12 haben kann, so dass auch etwaige Fehler, welche auf die Kupplung 6 zurückzuführen wären durch das jeweilige Muster der Winkelskalierung 1.12 im Bereich U1, U2 kompensiert werden. Im Ergebnis können unterschiedliche Muster durch unterschiedliche Abstände der Teilungsstriche oder durch unterschiedliche Neigungen der Teilungsstriche gegenüber der Achse A charakterisiert sein. Wegen des hohen Maßes an Präzision der Lageranordnung 12 sind diese Unterschiede in den Mustern einzelner Bereiche vergleichsweise gering. Dennoch tragen sie zur Erhöhung der Messgenauigkeit des Winkelmesssystems bei.

Nachdem die Winkelskalierung 1.12 aufgebracht ist, kann die vormontierte Einheit, bestehend aus der Lageranordnung 12 der Kupplung 6 und dem Flansch 5 von der Teilungsmaschine 100 demontiert werden. Im Zuge der Endmontage wird dann zunächst ein Abtastkopf 4 am Außenring 2 angebaut. Obwohl die Winkelskalierung auf dem Teilungsring 1.1 so aufgebracht ist, dass ein geometrisches Muster der Winkelskalierung 1.12 im ersten Bereich U1 von dem Muster im zweiten Bereich U2 in Abhängigkeit von der jeweils örtlichen Rundlaufabweichungen der Lageranordnung 12 abweicht, kann für die Abtastung der Winkelskalierung 1.12 stets der gleiche Typ von Abtastkopf 4 verwendet werden.

Abschließend wird an den Flansch 5 ein Gehäusedeckel 8 montiert, damit der Abtastkopf 4 und die Winkelskalierung 1.12 vor äußeren Einflüssen geschützt sind. Dieser Schutz wird weiterhin durch das Anbringen von Dichtringen 7 zwischen dem Teilungsring 1.1 und dem Flansch 5 verbessert. Somit stellt das Winkelmesssystem eine selbstständige Einheit dar, die vom Anwender einfach an einer zu messenden Welle montiert werden kann aber überaus exakte Winkelpositionen liefert.

Wie bereits erwähnt, umgreift der Teilungsring 1.1 den Außenring 2 teilweise. Entsprechend dieser Bauweise kann die Winkelskalierung 1.12 auf einem vergleichsweise großen Umfang aufgebracht werden, was selbstverständlich die Präzision des Winkelmesssystems erhöht.

Im Betrieb des Winkelmesssystems wird von einer in den Figuren nicht dargestellten Lichtquelle innerhalb des Gehäusedeckels 8 Licht durch eine optische Anordnung auf die Winkelskalierung 1.12 gesendet. Dieses Licht wird von der Winkelskalierung 1.12 positionsabhängig moduliert zum Abtastkopf 4 reflektiert. Dort wird das modulierte Licht durch Fotoelemente in positionsabhängige Fotoströme umgewandelt und elektronisch weiterverarbeitet.

Alternativ dazu kann die Winkelskalierung 1.12 auch als magnetische Teilung direkt auf den Teilungsring 1.1 aufgebracht werden. Entsprechend sind dann in diesem Fall im Abtastkopf 4 Magnetsensoren angeordnet, welche Magnetfelder positionsabhängig moduliert in positionsabhängige Ströme bzw. Spannungen umwandeln.

Dadurch, dass die Mantelfläche 1.14 sehr fein bearbeitet ist, kann der Abtastkopf 4 mit minimalem Abtastspalt zur Winkelskalierung 1.12 angeordnet sein, was eine erhöhte Signalqualität und damit ein besseres Messergebnis zur Folge hat.

Durch die integrierte Bauweise ist ferner das Winkelmesssystem sehr kompakt in seinen Außenmaßen und weist insbesondere eine überaus kleine maximale axiale Ausdehnung H auf. Im gezeigten Ausführungsbeispiel beträgt die axiale Ausdehnung H nur etwa 25 % des maximalen Außenradius Y. Des Weiteren wird durch die vorgestellte Bauweise ein hochwertiges Winkelmesssystem geschaffen, welches für große Durchmesser der zu messenden Wellen geeignet ist. So weist das hier vorgestellte Winkelmesssystem eine entsprechende Öffnung auf, deren Innenradius y etwa 66% des maximalen Außenradius Y ausmacht (y/Y = ²/₃).

## Patentansprüche

1. Winkelmesssystem, das eine Lageranordnung (12) und einen Abtastkopf (4) umfasst, wobei die Lageranordnung (12)
• einen Teilungsring (1.1),
• einen Außenring (2) und
• Wälzkörper (3) umfasst, wobei
der Teilungsring (1.1) relativ zum Außenring (2) um eine Achse (A) drehbar ist, und
sowohl am Teilungsring (1.1) als auch am Außenring (2) jeweils eine Lauffläche (1.11, 2.11) ausgebildet ist, wobei die Lauffläche (1.11) des Teilungsrings (1.1) einen kleineren Bahnradius (r) aufweist als die Lauffläche (2.11) des Außenrings (2),
die Lauffläche (2.11) des Außenrings (2) der Lauffläche (1.11) des Teilungsrings (1.1) gegenüber liegt und die Wälzkörper (3) zwischen beiden Laufflächen (1.11, 2.11) angeordnet sind, in der Weise, dass die Lageranordnung (12) radial spielfrei ist, und
eine Winkelskalierung (1.12) auf den Teilungsring (1.1) aufgebracht ist, die durch den Abtastkopf (4) abtastbar ist, **dadurch gekennzeichnet, dass**
die Winkelskalierung (1.12) unmittelbar auf dem Teilungsring (1.1) in der Weise aufgebracht ist und dass ein geometrisches Muster der Winkelskalierung (1.12) in einem ersten Bereich (U1) von einem geometrischen Muster der Winkelskalierung (1.12) in einem zweiten Bereich (U2) in Abhängigkeit von Rundlaufabweichungen der Lageranordnung (12) abweicht.

2. Winkelmesssystem gemäß dem Anspruch 1, wobei die Winkelskalierung (1.12) an einer Mantelseite des Teilungsrings (1.1) angeordnet ist.

3. Winkelmesssystem gemäß dem der Anspruch 2, wobei die Winkelskalierung (1.12) mit einer Richtungskomponente parallel zur Achse (A) ausgerichtet ist.

4. Winkelmesssystem gemäß einem der vorhergehenden Ansprüche, wobei die axiale Ausdehnung des Teilungsrings (1.1) in Radialrichtung variiert.

5. Winkelmessystem gemäß einem der vorhergehenden Ansprüche, wobei der Teilungsring (1.1) seine maximale axiale Ausdehnung (H) an seiner Innenwand (1.13) aufweist.

6. Winkelmesssystem gemäß einem der vorhergehenden Ansprüche, wobei sich derjenige Bereich (1.14) des Teilungsrings (1.1), auf welchem die Winkelskalierung (1.12) aufgebracht ist, zumindest teilweise radial außerhalb des minimalen Innendurchmessers des Außenrings (2) befindet.

7. Winkelmesssystem gemäß einem der vorhergehenden Ansprüche, wobei der Teilungsring (1.1) den Außenring (2) teilweise umgreift.

8. Winkelmesssystem gemäß einem der vorhergehenden Ansprüche, wobei die Winkelskalierung (1.12) mit einer radialen Richtungskomponente ausgerichtet ist.

9. Winkelmesssystem gemäß einem der vorhergehenden Ansprüche, wobei die Lageranordnung (12) axial spielfrei ist.

10. Verfahren zur Herstellung eines Winkelmesssystems mit einer Winkelskalierung (1.12), die von einem Abtastkopf (4) abtastbar ist, wobei das Winkelmesssystem eine Lageranordnung (12) aufweist, die einen Teilungsring (1.1), einen Außenring (2) und Wälzkörper (3) umfasst, und der Teilungsring (1.1) um eine Achse (A) gegenüber dem Außenring (2) drehbar ist, mit folgenden Schritten:
• Herstellen des Teilungsrings (1.1) und des Außenrings (2), wobei sowohl am Teilungsring (1.1) als auch am Außenring (2) jeweils eine fein bearbeitete Lauffläche (1.11, 2.11) erzeugt wird, wobei die Lauffläche (1.11) des Teilungsrings (1.1) einen kleineren Bahnradius (r) aufweist als die Lauffläche (2.11) des Außenrings (2),
• Zusammenbauen der Lageranordnung (12) in der Weise, dass die Lauffläche (2.11) des Außenrings (2) der Lauffläche (1.11) des Teilungsrings (1.1) gegenüber liegt und die Wälzkörper (3) zwischen beiden Laufflächen (1.11, 2.11) angeordnet sind, in der Weise, dass die Lageranordnung (12) radial spielfrei ist,
**gekennzeichnet durch**
• Festlegen des Teilungsrings (1.1) und des Außenrings (2) an relativ zueinander drehbaren Elementen (10, 20) einer Teilungsmaschine (100),
• Aufbringen der Winkelskalierung (1.12) unmittelbar auf den Teilungsring (1.1), wobei in diesem Schritt der Teilungsring (1.1) relativ zum Außenring (2) in der Teilungsmaschine (100) um die Achse (A) gedreht wird.

11. Verfahren zur Herstellung eines Winkelmesssystems gemäß dem Anspruch 10, wobei die Laufflächen (1.11, 2.11) mit Hilfe eines Schleif-, Hon- oder Läppprozesses bearbeitet werden.

12. Verfahren zur Herstellung eines Winkelmesssystems gemäß dem Anspruch 10 oder 11, wobei der Teilungsring (1.1) spanabhebend in der Weise hergestellt wird, dass dessen axiale Ausdehnung in Radialrichtung variiert.

13. Verfahren zur Herstellung eines Winkelmesssystems gemäß einem der Ansprüche 10 bis 12, wobei beim Zusammenbauen der Lageranordnung (12) eine radiale Vorspannung zwischen dem Teilungsring (1.1) und dem Außenring (2) erzeugt wird.

14. Verfahren zur Herstellung eines Winkelmesssystems gemäß dem Anspruch 13, wobei beim Zusammenbauen der Lageranordnung (12) auch eine axiale Vorspannung zwischen dem Teilungsring (1.1) und dem Außenring (2) erzeugt wird.

15. Verfahren zur Herstellung eines Winkelmesssystems gemäß einem der Ansprüche 10 bis 14, wobei der Außenring (2) mittelbar für das Aufbringen der Winkelskalierung (1.12) auf den Teilungsring (1.1) über eine Kupplung (6) an einem Element (20) der Teilungsmaschine (100) festgelegt wird, wobei die Kupplung (6) nach dem Aufbringen der Winkelskalierung (1.12) im Winkelmesssystem verbleibt.

16. Verfahren zur Herstellung eines Winkelmesssystems gemäß einem der Ansprüche 10 bis 15, wobei die Winkelskalierung (1.12) mit Hilfe eines Ablationsprozesses aufgebracht wird.

17. Verfahren zur Herstellung eines Winkelmesssystems gemäß dem Anspruch 16, wobei der Ablationsprozess ein Laserablations-Prozess ist.

18. Verfahren zur Herstellung eines Winkelmesssystems gemäß einem der Ansprüche 10 bis 17, wobei die Winkelskalierung (1.12) mit einer Richtungskomponente parallel zur Achse (A) auf den Teilungsring (1.1) aufgebracht wird.

19. Verfahren zur Herstellung eines Winkelmesssystems gemäß einem der Ansprüche 10 bis 17, wobei die Winkelskalierung (1.12) mit einer radialen Richtungskomponente auf den Teilungsring (1.1) aufgebracht wird.

## Claims

1. Angle measuring system which comprises a bearing arrangement (12) and a sensing head (4), wherein the bearing arrangement (12) comprises
- a scale ring (1.1),
- an outer ring (2) and
- roll bodies (3), wherein
the scale ring (1.1) is rotatable relatively to the outer ring (2) about an axis (A), and
both on the scale ring (1.1) and on the outer ring (2) a bearing surface (1.11, 2.11) is formed in each case, wherein the bearing surface (1.11) of the scale ring (1.1) has a smaller turning radius (r) than the bearing surface (2.11) of the outer ring (2),
the bearing surface (2.11) of the outer ring (2) lies opposite the bearing surface (1.11) of the scale ring (1.1) and the roll bodies (3) are arranged between both bearing surfaces (1.11, 2.11) in such a manner that the bearing arrangement (12) is radially free of play and an angle scale (1.12) is applied onto the scale ring (1.1), which angle scale can be sensed by the sensing head (4), **characterized in that**
the angle scale (1.12) is applied directly on the scale ring (1.1) in such a manner that a geometric pattern of the angle scale (1.12) in a first region (U1) differs from a geometric pattern of the angle scale (1.12) in a second region (U2) as a function of deviations in concentricity of the bearing arrangement (12).

2. Angle measuring system according to Claim 1, wherein the angle scale (1.12.) is arranged on a convex surface side of the scale ring (1.1).

3. Angle measuring system according to Claim 2, wherein the angle scale (1.12) is aligned with a direction component parallel with the axis (A).

4. Angle measuring system according to one of the preceding claims, wherein the axial extent of the scale ring (1.1) varies in the radial direction.

5. Angle measuring system according to one of the preceding claims, wherein the scale ring (1.1) has its maximum axial extent (H) at its inner wall (1.13).

6. Angle measuring system according to one of the preceding claims, wherein the region (1.14) of the scale ring (1.1) on which the angle scale (1.12) is applied is located at least partially radially outside the minimal internal diameter of the outer ring (2).

7. Angle measuring system according to one of the preceding claims, wherein the scale ring (1.1) partially grips the outer ring (2).

8. Angle measuring system according to one of the preceding claims, wherein the angle scale (1.12) is aligned with a radial direction component.

9. Angle measuring system according to one of the preceding claims, wherein the bearing arrangement (12) is axially free of play.

10. Method for producing an angle measuring system with an angle scale (1.12) which can be sensed by a sensing head (4), wherein the angle measuring system has a bearing arrangement (12) which comprises a scale ring (1.1), an outer ring (2) and roll bodies (3), and the scale ring (1.1) is rotatable about an axis (A) with respect to the outer ring (2), with the following steps:
- producing the scale ring (1.1) and the outer ring (2), wherein both on the scale ring (1.1) and on the outer ring (2) a finely machined bearing surface (1.11, 2.11) is formed in each case, wherein the bearing surface (1.11) of the scale ring (1.1) has a smaller turning radius (r) than the bearing surface (2.11) of the outer ring (2),
- assembling the bearing arrangement (12) in such a manner that the bearing surface (2.11) of the outer ring (2) lies opposite the bearing surface (1.11) of the scale ring (1.1) and the roll bodies (3) are arranged between both bearing surfaces (1.11, 2.11) in such a manner that the bearing arrangement (12) is radially free of play, **characterized by**
- fixing the scale ring (1.1) and the outer ring (2) to elements (10, 20) of a dividing machine (100) which are rotatable relatively to one another,
- applying the angle scale (1.12) directly to the scale ring (1.1), wherein in this step, the scale ring (1.1) is rotated relatively to the outer ring (2) in the dividing machine (100) about the axis (A).

11. Method for producing an angle measuring system according to Claim 10, wherein the bearing surfaces (1.11, 2.11) are machined with the aid of a grinding, honing or lapping process.

12. Method for producing an angular measuring system according to Claim 10 or 11, wherein the scale ring (1.1) is produced using machining in such a manner that its axial extent varies in the radial direction.

13. Method for producing an angular measuring system according to one of Claims 10 to 12, wherein a radial prestress is generated between the scale ring (1.1) and the outer ring (2) during the assembly of the bearing arrangement (12).

14. Method for producing an angular measuring system according to Claim 13, wherein an axial prestress is also generated between the scale ring (1.1) and the outer ring (2) during the assembly of the bearing arrangement (12).

15. Method for producing an angle measuring system according to one of Claims 10 to 14, wherein the outer ring (2) is indirectly fixed to an element (20) of the dividing machine (100) via a coupling (6) for the application of the angle scale (1.12) onto the scale ring (1.1), wherein the coupling (6) remains in the angle measuring system after the application of the angle scale (1.12).

16. Method for producing an angle measuring system according to one of Claims 10 to 15, wherein the angle scale (1.12) is applied with the aid of an ablation process.

17. Method for producing an angle measuring system according to Claim 16, wherein the ablation process is a laser ablation process.

18. Method for producing an angle measuring system according to one of Claims 10 to 17, wherein the angle scale (1.12) is applied onto the scale ring (1.1) with a direction component parallel to the axis (A).

19. Method for producing an angle measuring system according to one of Claims 10 to 17, wherein the angle scale (1.12) is applied onto the scale ring (1.1) with a radial direction component.

## Revendications

1. Système de mesure d'angle, qui comporte un agencement de palier (12) et une tête palpeur (4), l'agencement de palier (12) comportant
- une bague de division (1.1),
- une bague extérieure (2) et
- des corps de roulement (3),
la bague de division (1.1) pouvant tourner par rapport à la bague extérieure (2) autour d'un axe (A), et chaque fois une surface de roulement (1.11, 2.11) étant réalisée aussi bien sur la bague de division (1.1) que sur la bague extérieure (2), la surface de roulement (1.11) de la bague de division (1.1) présentant un rayon de trajectoire (r) plus petit que la surface de roulement (2.11) de la bague extérieure (2), la surface de roulement (2.11) de la bague extérieure (2) faisant face à la surface de roulement (1.11) de la bague de division (1.1), et les corps de roulement (3) étant disposés entre les deux surfaces de roulement (1.11, 2.11), en ce sens que l'agencement de palier (12) est sans jeu dans le sens radial, et une graduation d'angle (1.12) étant appliquée sur la bague de division (1.1), laquelle peut être balayée par la tête palpeur (4), **caractérisé en ce que** la graduation d'angle (1.12) est appliquée directement sur la bague de division (1.1) en ce sens qu'un modèle géométrique de graduation d'angle (1.12) dans une première zone (U1) s'écarte d'un modèle géométrique de la graduation d'angle (1.12) dans une seconde zone (U2) en fonction des déviations de rondeur de l'agencement de palier (12).

2. Système de mesure d'angle selon la revendication 1, la graduation d'angle (1.12) étant disposée sur un côté d'enveloppe de la bague de division (1.1).

3. Système de mesure d'angle selon la revendication 2, la graduation d'angle (1.12) étant orientée avec une composante de direction parallèlement à l'axe (A).

4. Système de mesure d'angle selon l'une quelconque des revendications précédentes, l'extension axiale de la bague de division (1.1) variant dans le sens radial.

5. Système de mesure d'angle selon l'une quelconque des revendications précédentes, la bague de division (1.1) présentant son extension (H) axiale maximale sur sa paroi intérieure (1.13).

6. Système de mesure d'angle selon l'une quelconque des revendications précédentes, la zone (1.14) de la bague de division, sur laquelle la graduation d'angle (1.12) est appliquée, se trouvant au moins en partie radialement à l'extérieur du diamètre intérieur minimum de la bague extérieure (2).

7. Système de mesure d'angle selon l'une quelconque des revendications précédentes, la bague de division (1.1) entourant partiellement la bague extérieure (2).

8. Système de mesure d'angle selon l'une quelconque des revendications précédentes, la graduation d'angle (1.12) étant orientée avec une composante de direction radiale.

9. Système de mesure d'angle selon l'une quelconque des revendications précédentes, l'agencement de palier (12) étant sans jeu dans le sens axial.

10. Procédé pour la fabrication d'un système de mesure d'angle avec une gradation d'angle (1.12), qui peut être balayée par une tête palpeur (4), le système de mesure d'angle présentant un agencement de palier (12) qui comporte une bague de division (1.1), une bague extérieure (2) et du corps de roulement (3), et la bague de division (1.1) pouvant tourner autour d'un axe (A) par rapport à la bague extérieure (2), comprenant les étapes suivantes :
- fabrication de la bague de division (1.1) et de la bague extérieure (2), une surface de roulement (1.11, 2.11) finement travaillée étant générée à chaque fois aussi bien sur la bague de division (1.1) que sur la bague extérieure (2), la surface de roulement (1.11) de la bague de division (1.1) présentant un rayon de trajectoire (r) inférieur à la surface de roulement (2.11) de la bague extérieure (2),
- assemblage de l'agencement de palier (12) en ce sens que la surface de roulement (2.11) de la bague extérieure (2) fait face à la surface de roulement (1.11) de la bague de division (1.1) et les corps de roulement (3) sont disposés entre les deux surfaces de roulement (1.11, 2.11), en ce sens que l'agencement de palier (12) est sans jeu dans le sens radial, **caractérisé par**
- fixation de la bague de division (1.1) et de la bague extérieure (2) sur des éléments (10, 20), pouvant tourner les unes par rapport aux autres, d'une machine de division (100),
- application de la graduation d'angle (1.12) directement sur la bague de division (1.1), la bague de division (1.1) étant tournée lors de cette étape autour de l'axe (A) par rapport à la bague extérieure (2) dans la machine de division (100).

11. Procédé pour la fabrication d'un système de mesure d'angle selon la revendication 10, les surfaces de roulement (1.11, 2.11) étant travaillées à l'aide d'un processus de meulage, de honage ou de rodage.

12. Procédé pour la fabrication d'un système de mesure d'angle selon la revendication 10 ou 11, la bague de division (1.1) étant fabriquée par enlèvement de copeaux en ce sens que son extension axiale varie dans le sens radial.

13. Procédé pour la fabrication d'un système de mesure d'angle selon l'une quelconque de la revendication 10 à 12, une précontrainte radiale étant générée entre la bague de division (1.11) et la bague extérieure (2) lors l'assemblage de l'agencement de palier (12).

14. Procédé pour la fabrication d'un système de mesure d'angle selon la revendication 13, une précontrainte axiale étant générée entre la bague de division (1.1) et la bague extérieure (2) lors de l'assemblage de l'agencement de palier (12).

15. Procédé pour la fabrication d'un système de mesure d'angle selon l'une quelconque des revendications 10 ou 14, la bague extérieure (2) étant fixée indirectement pour l'application de la graduation d'angle (1.12) sur la bague de division (1.1) au moyen d'un accouplement (6) sur un élément (20) de la machine de division (100), l'accouplement (6) restant dans le système de mesure d'angle après la fixation de la graduation d'angle (1.12).

16. Procédé pour la fabrication d'un système de mesure d'angle selon l'une quelconque des revendications 10 à 15, la graduation d'angle (1.12) étant appliquée à l'aide d'un processus d'ablation.

17. Procédé pour la fabrication d'un système de mesure d'angle selon la revendication 16, le processus d'ablation étant un processus d'ablation par laser.

18. Procédé pour la fabrication d'un système de mesure d'angle selon l'une quelconque des revendications 10 à 17, la graduation d'angle (1.12) étant appliquée avec une composante de direction parallèlement à l'axe (A) sur la bague de division (1.1).

19. Procédé pour la fabrication d'un système de mesure d'angle selon l'une quelconque des revendications 10 à 17, la graduation d'angle (1.12) étant appliquée avec une composante de direction radiale sur la bague de division (1.1).
